# EUROPEAN PATENT SPECIFICATION

(11) **EP 2 852 200 B1**
(45) Date of publication and mention of the grant of the patent: **01.04.2020**
(21) Application number: 14185081.8
(22) Date of filing: 17.09.2014
(51) Int. Cl.: H04W 12/02, H04L 29/06, H04W 88/06, H04W 12/00

(54) **Communication in a system having different user data qualities**
Kommunikation in einem System mit verschiedenen Benutzerdatenqualitäten
Communication dans un système ayant différentes qualités de données utilisateur

(30) Priority: 19.09.2013 FI 20135941
(43) Date of publication of application: 25.03.2015
(73) Proprietor: Airbus Defence and Space Oy, 00380 Helsinki (FI); Airbus Defence and Space SAS, 31402 Toulouse Cedex 4 (FR)
(72) Inventor: Pichna, Roman, 00380 Helsinki (FI); Paterour, Olivier, 78280 Guyancourt (FR)
(74) Representative: Kolster Oy Ab

(56) References cited:
- WO-A1-2010/117327
- SCHULZRINNE H ET AL: "RFC 3550 RTP: A Transport Protocol for Real-Time Applications", NETWORK WORKING GROUP REQUEST FOR COMMENTS, XX, XX, 1 July 2003 (2003-07-01), pages 1-104, XP002276760,

## Description

### FIELD

The invention relates to the field of telecommunications and, particularly, to communication where at least two different user data qualities may be involved.

### BACKGROUND

A Professional Mobile Radio (PMR) network is a mobile communication network for a special group of users, for example, for one or more enterprises or institutions. Typical examples of PMR networks are public safety type PMR networks used by public officials such as police, fire brigade and medical personnel. One example technology that is used in PMR networks is Terrestrial Trunked Radio Access (TETRA).

The evolvement of wireless broadband services in commercial (public) networks have increased user needs to obtain in the professional networks the same service quality that is obtained in the commercial wireless networks. Currently solutions integrating existing TETRA networks and a long term evolution (LTE) based public safety mobile broadband networks to provide a cost effective migration to the public safety mobile broadband professional networks are introduced. For example, LTE-TETRA dual mode terminals (LTE/TETRA) and even LTE only terminals that support TETRA services are soon to be seen in the market. With co-existing TETRA networks and LTE based public safety networks it may be that some group members are served by a TETRA network and some group members are served by an LTE network. In order to deliver voice, for example, to all active members of a group call, a speech coding providing the basic quality and supported also user terminals operating in the TETRA network should be used, although the speaker and one or more, possible even most of, the other group members have terminals supporting also a speech coding providing a higher voice quality.

WO 2010/117327 discloses a solution enabling backwards compatible payload format for different speech codecs. In the solution, a RTP packet is provided, a payload according to a first codec is included in the provided RTP packet, a payload according to a second codec is appended into the provided RTP packet, and an unused bit is designated to provide an indication of the presence of the appended second codec payload.

However, one of the key features in the public safety is that an end-to-end encryption of speech items, for example, is used. If a data packet formed according to the solution disclosed in WO 2010/117327 is encrypted, a legacy user terminal is not able to decrypt a received data packet unless the legacy user terminal is upgraded to be able to decrypt longer data packets. In other words, the backward compatibility is lost.

Schulzrinne H et al: "RFC 3550 RTP: A Transport Protocol for Real-Time Applications"; Networking Working Group Request for comments, 1 July 2003 teaches that all the octects that will be encapsulated for transmission in a single lower-layer packet are encrypted as a unit. For RTCP it is possible to segregate the individual RTCP packets in a compound RTCP packet into two separate compound RTCP packets, one to be encrypted and one to be sent in clear.

### SUMMARY

An object of the invention is to provide a possibility to have a higher quality user data transmitted as end-to-end encrypted to apparatuses supporting the higher quality while ensuring that apparatuses not supporting the higher quality user data receive the same user data as a basic quality end-to-end encrypted user data. The object of the invention is achieved by methods, an apparatus, a computer program product, and a system which are characterized by what is stated in the independent claims. The preferred embodiments of the invention are disclosed in the dependent claims.

### BRIEF DESCRIPTION OF THE DRAWINGS

In the following different embodiments will be described in greater detail with reference to the attached drawings, in which
Figure 1 shows simplified architecture of a network and schematic diagrams of exemplary apparatuses;
Figures 2, 3, 4, 5, 6 and 7 illustrate different examples of a basic structure for a user apparatus;
Figures 8, 9, and 10 illustrate different examples of an encoded data set;
Figures 11 and 12 are flow charts illustrating examples of a network apparatus functionality;
Figure 13 illustrates signalling according to an example, and
Figures 14 and 15 are block diagrams of exemplary apparatuses.

### DETAILED DESCRIPTION OF SOME EMBODIMENTS

Exemplary embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any hybrid communication system configured to support end-to-end encryption and comprising an access network for user apparatuses that support higher quality user data and another access network for user apparatuses that support basic quality user data, and to any user apparatus configured to operate at least in one of the networks/systems and support at least user data format in another network/system, or to any network apparatus configured to operate at least in one of the networks/systems or as a gateway or corresponding interworking unit between the networks/systems. Such a network/system may be based on a wireless communication system or a communication system utilizing both fixed networks and wireless networks. The communication system may be a wireless communication system or a communication system utilizing both fixed networks and wireless networks. The protocols used, the specifications of communication systems, access point nodes, base stations and wireless user apparatuses develop rapidly. Such development may require extra changes to an embodiment. Therefore, all words and expressions should be interpreted broadly and they are intended to illustrate, not to restrict, the embodiment.

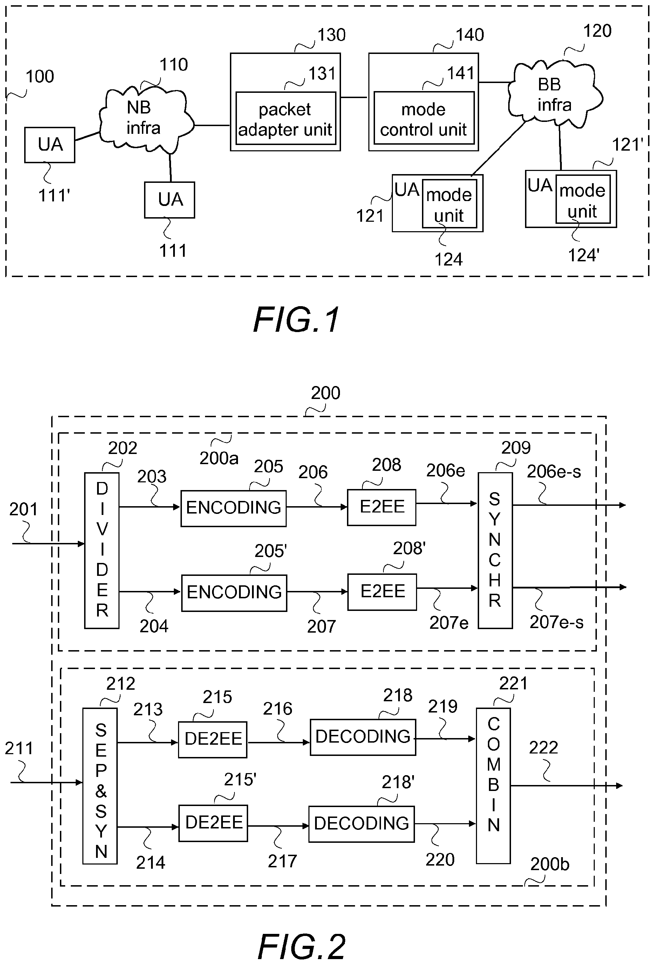

A general architecture of a communication system according to an embodiment is illustrated in Figure 1. Figure 1 is a simplified system architecture only showing some apparatuses and functional entities, all being logical units whose implementation may differ from what is shown. The connections shown in Figure 1 are logical connections; the actual physical connections may be different. It is apparent to a person skilled in the art that the systems and infrastructures also comprise other functions and structures used in or for communications. They, as well as the protocols, are well known by persons skilled in the art and are irrelevant to the actual invention. Therefore, they need not to be discussed in more detail here.

In the example illustrated in Figure 1, the system 100 comprises a narrowband infrastructure 110, a broadband infrastructure 120 and a network apparatus (network node or network element) 130 configured to connect the infrastructures 110, 120 via a network apparatus (network node or network element) 140. In the illustrated example, there are two narrowband user apparatuses 111, 111' connectable to the narrowband infrastructure 110, and two broadband user apparatuses 121, 121' connectable to the broadband infrastructure 120.

The narrowband infrastructure 110 illustrates herein an infrastructure using for user data encoding formats that provide basic quality for reproduced user data. For example, the narrowband infrastructure may illustrate a legacy system/infrastructure/network that is still in use, even though newer technology systems are available. Examples of narrowband infrastructure 110 systems include Terrestrial Trunked Radio Access (TETRA), TETRAPOL, P25, DMR (digital mobile radio) systems, a PAMR network (Public Access Mobile Radio), and any narrowband communication system, like 2^{nd} generation mobile communications systems, conveying voice in legacy narrowband bearers.

The broadband infrastructure 120 illustrates herein a non-legacy system/infrastructure/network having a higher transmission capability and thereby being able to use for user data encoding formats that provide a higher quality for reproduced user data than the data encoding formats providing the basic quality in a legacy system. Examples of broadband infrastructure 120 system include a 3rd or 4^{th}, or beyond, generation mobile communications systems, like LTE (Long Term Evolution) access network based systems, LTE Advanced access network based systems, WiMAX (Worldwide Interoperability for Microwave Access), WLAN (Wireless Local Area Network), such as WiFi, fixed LAN (Local Area Network), wired LAN.

However, it should be appreciated that the above lists are not exhaustive and that some systems may be classified both as a narrowband (legacy) and a broadband (non-legacy) system, and while the communications system evolve a non-legacy system may mature to a legacy system.

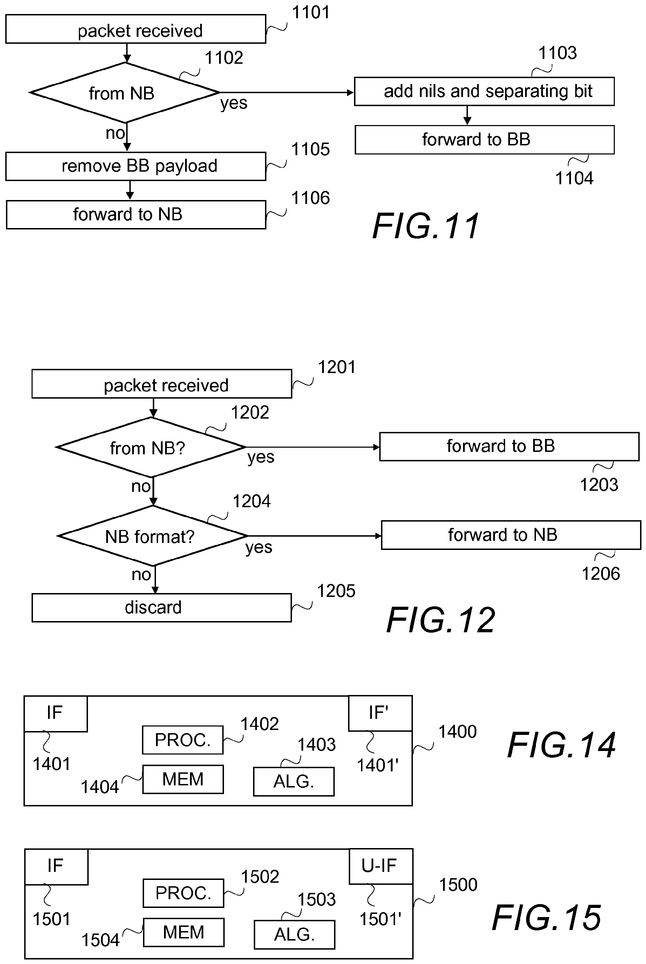

The network apparatus 130 connecting the two systems 110, 120 providing different quality for encoded user data may be a gateway, a router, a switch, or any network apparatus providing an interworking unit between the systems that may be included in one of the infrastructures or be a kind of a "stand alone" network apparatus. The network apparatus 130 comprises a packet adapter unit (module) 131 for ensuring that encoded user data originating from the broadband infrastructure are forwarded as data having the basic quality to the narrowband infrastructure, as will be explained in more detail below with Figures 11 and 12.

The narrowband user apparatuses 111, 111' are configured to receive and transmit a basic quality user data. The broadband user apparatuses 121, 121' are configured to receive and transmit a higher quality user data, and the broadband user apparatuses 121, 121' may be configured to support communications with the narrowband user apparatuses. For that purpose a broadband user apparatus comprises at least one of the basic structures illustrated in Figures 2, 3, 4, 5, 6 and 7. In the illustrated example, the broadband user apparatuses 121, 121' comprise also a mode unit 124, 124' which includes one of the basic structures with an additional configuration that is responsive to the mode control unit, the mode unit commanding, by means of the additional configuration, the basic structure to use one of two possible encodings according to instructions received from the mode control unit, as will be described in more detail below. The user apparatus 111,111', 121, 121' refers to a computing device (equipment). Such computing devices (apparatuses) include wireless mobile communication devices operating with or without a subscriber identification module in hardware or in software, including, but not limited to, the following types of devices: mobile phone, smart-phone, personal digital assistant (PDA), handset, laptop and/or touch screen computer, e-reading device, tablet, game console, notebook, multimedia device, a handheld radio terminal, a so called fixed radio apparatus in a vehicle, and a dispatching workstation that may communicate over a fixed connection and/or wirelessly.

The exemplary system comprises one or more mode control units 141, one of which is shown in the illustrated example and located in a separate network apparatus 140. However, that needs not to be the case; the mode control unit may be implemented in a cloud, for example a cloud in a core network, or distributed into two or more network apparatuses (network elements). The network apparatus may be in the broadband infrastructure, and/or in the narrowband infrastructure, and/or integrated with the network apparatus 130. The network apparatus 140 comprising the mode control unit 141 may be a gateway, a dispatcher station, a switch, in a base station, like an evolved node B, a push-to-talk server for the broadband infrastructure, a server providing public safety for the broadband, a non-legacy user apparatus, a router, an interworking unit, etc. In other words, the mode control unit 141 may be in any network apparatus and/or user apparatus (including the non-legacy user apparatus) and/or any apparatus in a network management system or in a cloud configured to contain one or more rules based on which it may determine that a non-legacy user apparatus should not operate in a default mode but in a narrowband mode, i.e. use only the narrowband user data format for outgoing user data. The used rule may be different in different apparatuses comprising the mode control unit, and there are no restrictions what the rule or a combination of rules should be. Examples of rules comprise an access network operator policy, a subscription profile, an error rate or network load threshold value for a non-legacy user apparatus, a location of the user apparatus, for example in the edge area of broadband infrastructure only narrowband user data format is to be used, a congestion of a serving network, a ratio between group members with legacy user apparatuses to group members with non-legacy user apparatuses, an amount of group members with legacy user apparatuses and/or with non-legacy user apparatuses. Also a user input instructing to "legacy user data format only" may be interpreted to be a rule. Such a user input may be given by a user using a dispatcher station and affecting all or one or more group members, or a user of the non-legacy user apparatus. Further, different types of user data may have different rules.

It should be appreciated that the mode control unit 141 and the mode units' 124, 124' additional configuration are optional units and the invention may be implemented without them.

In the following, different embodiments will be described using, as an example of a system to which the embodiments may be applied, a narrowband access infrastructure based on TETRA and a broadband access infrastructure an LTE based public safety and an end-to-end encrypted voice communication as an example of an end-to-end encrypted user data communication, without restricting the embodiments to such an architecture, however. The end-to-end encryption is one of the security features of TETRA. The end-to-end encryption is a mechanism that provides continuous protection of the confidentiality and integrity of transmitted information by encrypting the information at the origin and decrypting the information at its destination. In any of the intermediate stages the information is available only in encrypted form and therefore it is possible for one communication endpoint to send information to another communication endpoint without any element in the middle of the message flow being able to access the information. It should be appreciated that the details of the end-to-end encryption are not relevant for the actual invention, and therefore they are not described in more detail herein. One skilled in the art knows how to apply any security association and any security algorithm in the system.

Figure 2 illustrates an exemplary basic structure for a codec 200 comprising an encoder side 200a for encoding user data that is to be transmitted and a decoder side 200b for decoding received user data. Below term "a tiered speech data item" is used as an example of a "user data set", and "a tiered data item" as a synonym to the "user data set".

In the encoder side 200a, when an input signal 201, i.e. voice or audio from a microphone, is received, it is divided by a divider 202 to a narrowband signal 203 having a narrowband quality, and to an "add on" signal 204 comprising all the additional information (delta information) that is in the input signal 201 but not in the narrowband signal 203. In other words, the divider 202 sends in the narrowband signal 203 (information flow 203) that is sufficient for a corresponding encoding unit 205 to produce an output, i.e. a narrowband bit stream 206. The "add on" signal 204 (information flow 204) contains additional information received in the input signal 201 but excluded in the narrowband signal 203 (information flow 203). Then the two signals are encoded by corresponding encoding units 205, 205', the result being a narrowband bit stream 206 in a narrowband speech format and an "add on" bit stream 207 in a broadband speech format. For example, one of the encoding units may be a TETRA encoder and the other a broadband "add-on" encoder, in which exemplary case the narrowband speech format would be TETRA speech format and the broadband speech format might be an LTE speech format, for example. Both bit streams 206, 207 are encrypted separately by corresponding encryption units 208, 208' (E2EE, end-to-end encryption), resulting to corresponding end-to-end encrypted bit streams 206e, 207e. The end-to-end encrypted bit streams are then synchronized by a synchronizer 209 (synchr) to corresponding packets 206e-s, 207e-s and outputted to be forwarded to one or more recipient(s) providing a tiered speech item for a user data bit stream.

If instead of the mere basic structure functionality described above, the mode unit comprising the basic structure with additional configuration is implemented, the additional configuration is configured in response to receiving a command indicating at least "legacy only output", to disable or power down the encoding unit 205' of the "add on" bit stream 206, or instruct the synchronizer 209 not to output the encrypted "add on" bit stream 207e-s. In both solutions the additional configuration may be configured to disable the synchronization of the bit streams by the synchronizer.

In the decoder side 200b, when a bit stream 211 is received, a separating and synchronizing unit 212 (sep&syn) detects whether it is a synchronized narrowband bit stream, a synchronized "add on" bit stream or an unsynchronized narrowband bit stream. It should be appreciated that depending on an implementation, the received bit stream 211 may comprise two separate bit streams, one corresponding to the narrowband bit stream and the other the "add on" bit stream, or the bit streams are received as one bit stream. If the bit stream is a synchronized bit stream, corresponding narrowband bit stream 213 and "add on" bit stream 214 are forwarded from the separating and synchronizing unit 212 simultaneously or with such a time difference that corresponding signals will reach a combiner unit 221 (combin) simultaneously. However, it bears no significance where they synchronization is performed, it may be performed even in the combiner unit. An end-to-end encrypted narrowband bit stream 213 is decrypted by a decryption unit 215 (DE2EE, decrypting end-to-end encryption) to a narrowband bit stream 216 in a narrowband format. The narrowband bit stream 216 is then decoded by a decoding unit 218 from the narrowband format to a corresponding narrowband signal 219 with a basic quality. The narrowband signal is then inputted to the combiner unit 221, which combines the narrowband signal 219 with a simultaneously received "add on" signal 220, if such a signal is received, and outputs a voice signal 222 via loudspeakers, for example. Correspondingly, the "add on" bit stream 214 is decrypted by a decryption unit 215' (DE2EE) to an "add on" bit stream 217 in an broadband speech format. The "add on" bit stream 217 is then decoded by a decoding unit 218' to a corresponding "add on" signal 220. The "add on" signal is then inputted to the combiner unit 221. The outputted voice signal 222 provides a high quality voice if the narrowband signal is combined with the information on "add on" signal. However, if the originator's user apparatus outputted only a narrowband bit stream, there is no "add on" signal to be combined to the narrowband signal by the combiner, and the outputted voice signal 222 has a basic quality.

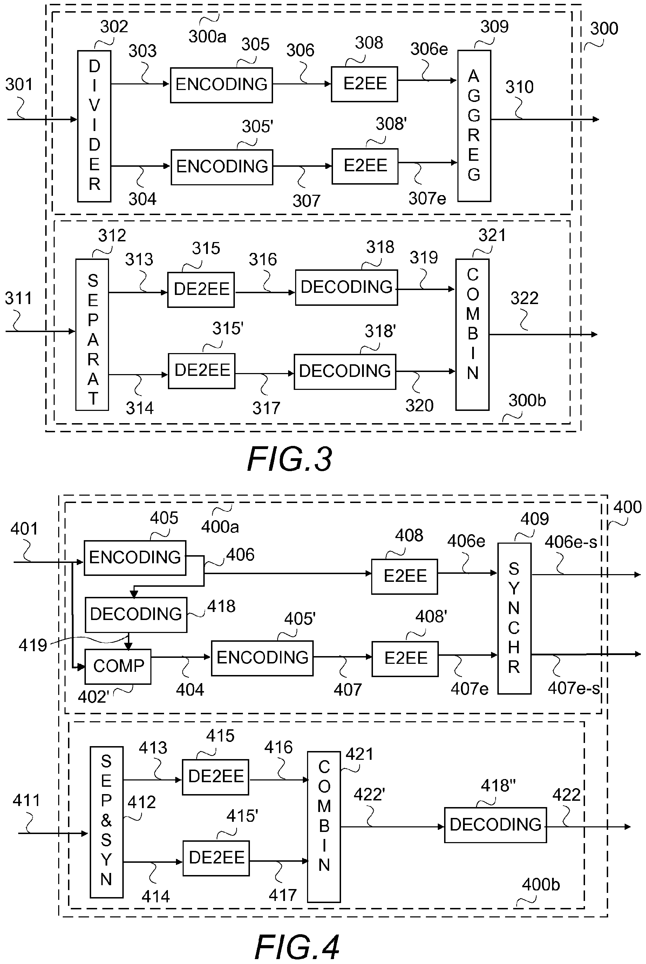

Figure 3 illustrates another exemplary basic structure for a codec 300 comprising an encoder side 300a for encoding user data that is to be transmitted and a decoder side 300b for decoding received user data. The codec illustrated in Figure 3 differs from the codec illustrated in Figure 2 by having in the encoder side 300a an aggregation unit 309 (aggreg) instead of the synchronizer and in the decoder side 300b a separating unit 312 (separat) instead of the separating and synchronizing unit.

In the encoder side 300a, when an input signal 301, i.e. voice or audio from a microphone, is received, it is divided by a divider 302 to a narrowband signal 303 having a narrowband quality, and to an "add on" signal 304 comprising all the additional information (delta information) that is in the input signal 301 but not in the narrowband signal 303. Then the two signals are encoded by corresponding encoding units 305, 305', the result being a narrowband bit stream 306 in a narrowband speech format and an "add on" bit stream 307 in a broadband speech format. Both bit streams 306, 307 are encrypted separately by corresponding encryption units 308, 308', resulting to corresponding end-to-end encrypted bit streams 306e, 307e. The end-to-end encrypted bit streams are then aggregated by the aggregation unit 309 to a packet 310 and outputted to be forwarded to one or more recipient(s) providing a tiered speech item for a user data bit stream.

If instead of the mere basic structure functionality described above, the mode unit comprising the basic structure with additional configuration is implemented, the additional configuration is configured in response to receiving a command indicating at least "legacy only output", to disable or power down the encoding 305' of the "add on" bit stream 307, or instruct the aggregation unit 309 to output only the encrypted TETRA bit stream 306e instead of aggregating the two bit streams.

In the decoder side 300b, when a bit stream 311 is received, the separating unit 312 separates from a packet comprising a narrowband bit stream and an "add on" bit stream the different streams. The separation may be based on detecting a separating bit (or separating bits) in the packet, or then the part of the packet payload having a predetermined size corresponding to the size of a narrowband bit stream payload in the beginning of the payload is inputted as an end-to-end encrypted narrowband bit stream 313 to a decryption unit 315 (DE2EE), and the rest of the payload, if exists, is inputted as an end-to-end encrypted "add on" bit stream 314 to a decryption unit 315' (DE2EE). The separation unit is scheduled to input the different bit streams so that they reach a combiner unit 321 (combin) in the same time. However, it bears no significance where they synchronization is performed, it may be performed even in the combiner unit. However, it bears no significance where they synchronization is performed, it may be performed even in the combiner unit. An end-to-end encrypted narrowband bit stream 313 is decrypted by the decryption unit 315 to a narrowband bit stream 316 in a narrowband format. The narrowband bit stream 316 is then decoded by a decoding unit 318 from the narrowband format to a corresponding narrowband signal 319 with a basic quality. The narrowband signal is then inputted to the combiner unit 321, which combines the narrowband signal 319 with a simultaneously received "add on" signal 320, if such a signal is received, and outputs a voice signal 322 via loudspeakers, for example. Correspondingly, the "add on" bit stream 314 is decrypted by the decryption unit 315' to an "add on" bit stream 317 in an broadband speech format. The "add on" bit stream 317 is then decoded by a decoding unit 318' to a corresponding "add on" signal 320. The "add on" signal is then inputted to the combiner unit 321. The outputted voice signal 322 provides a high quality voice if the narrowband signal is combined with the information on "add on" signal. However, if the originator's user apparatus outputted only a narrowband bit stream, there is no "add on" signal to be combined to the narrowband signal by the combiner, and the outputted voice signal 322 has a basic quality.

Figure 4 illustrates another exemplary basic structure for a codec 400 comprising an encoder side 400a for encoding user data that is to be transmitted and a decoder side 400b for decoding received user data. The codec illustrated in Figure 4 differs from the codec illustrated in Figure 2 by having in the encoder side 400a decoding unit 418 and a comparing unit 402' (comp) instead of the divider, and in the decoder side 400b the combiner unit 421 before a decoding unit 418".

In the encoder side 400a, when an input signal 401, i.e. voice or audio from a microphone, is received, it is encoded by a narrowband encoding unit 405, the result being a narrowband bit stream 406 in a narrowband speech format. Then the narrowband bit stream 406 is forwarded to an encryption unit 408 and to the decoding unit 418 configured to decode the narrowband speech format to a corresponding narrowband signal 419 which is inputted to the comparing unit 402'. The comparing unit 402' receives also the input signal 401 and is configured to compare the original input 401 to the narrowband signal 419 to generate an "add on" signal 404 comprising the difference between the original input and the narrowband signal, i.e. all the additional information (delta information) which is then encoded by a broadband encoding unit 405', the result being an "add on" bit stream 407 in a broadband speech format.

Both bit streams 406, 407 are encrypted separately by corresponding encryption units 408, 408' (E2EE), resulting to corresponding end-to-end encrypted bit streams 406e, 407e. The end-to-end encrypted bit streams are then synchronized by a synchronizer 409 (synchr) to corresponding packets 406e-s, 407e-s and outputted to be forwarded to one or more recipient(s) providing a tiered speech item for a user data bit stream.

If instead of the mere basic structure functionality described above, the mode unit comprising the basic structure with additional configuration is implemented, the additional configuration is configured in response to receiving a command indicating at least "legacy only output", to disable or power down the decoding unit 418 and/or the comparing unit 402' and/or the encoding unit 405' of the "add on" bit stream 406, or instruct the synchronizer 409 not to output the encrypted "add on" bit stream 407e-s. In both solutions the additional configuration may be configured to disable or power down the synchronization of the bit streams by the synchronizer.

In the decoder side 400b, when a bit stream 411 is received, a separating and synchronizing unit 412 (sep&syn) detects whether it is a synchronized narrowband bit stream, a synchronized "add on" bit stream or an unsynchronized narrowband bit stream. It should be appreciated that depending on an implementation, the received bit stream 411 may comprise two separate bit streams, one corresponding to the narrowband bit stream and the other the "add on" bit stream, or the bit streams are received as one bit stream. If the bit stream is a synchronized bit stream, corresponding narrowband bit stream 413 and "add on" bit stream 414 are forwarded from the separating and synchronizing unit 412 simultaneously or with such a time difference that corresponding signals will reach the combiner unit 421 (combin) simultaneously. However, it bears no significance where they synchronization is performed, it may be performed even in the combiner unit. An end-to-end encrypted narrowband bit stream 413 is decrypted by a decryption unit 415 (DE2EE) to a narrowband bit stream 416 in a narrowband format. Correspondingly, the "add on" bit stream 414, if such exits, is decrypted by a decryption unit 415' (DE2EE) to an "add on" bit stream 417 in a broadband speech format. The narrowband bit stream 416 is then inputted to the combiner unit 421, which combines the narrowband bit stream 416 with a simultaneously received "add on" bit stream 417, if such a bit stream is received, and outputs a bit stream 422'. In other words, the bit stream 422' is either a combination of the narrowband bit stream and the "add on" bit stream, i.e. a higher quality bit stream, or a mere narrowband bit stream. The bit stream 422' is then decoded by the decoding unit 418" to a voice signal 422 that is outputted via loudspeakers, for example. The outputted voice signal 422 provides a high quality voice if the narrowband signal is combined with the information on "add on" signal. However, if the originator's user apparatus outputted only a narrowband bit stream, there is no "add on" signal to be combined to the narrowband signal by the combiner, and the outputted voice signal 422 has a basic quality.

It should be appreciated that a codec may comprise the encoder side illustrated with Figure 4 and the decoder side illustrated with Figure 2, or a codec may comprise the encoder side illustrated with Figure 2 and the decoder side illustrated with Figure 4.

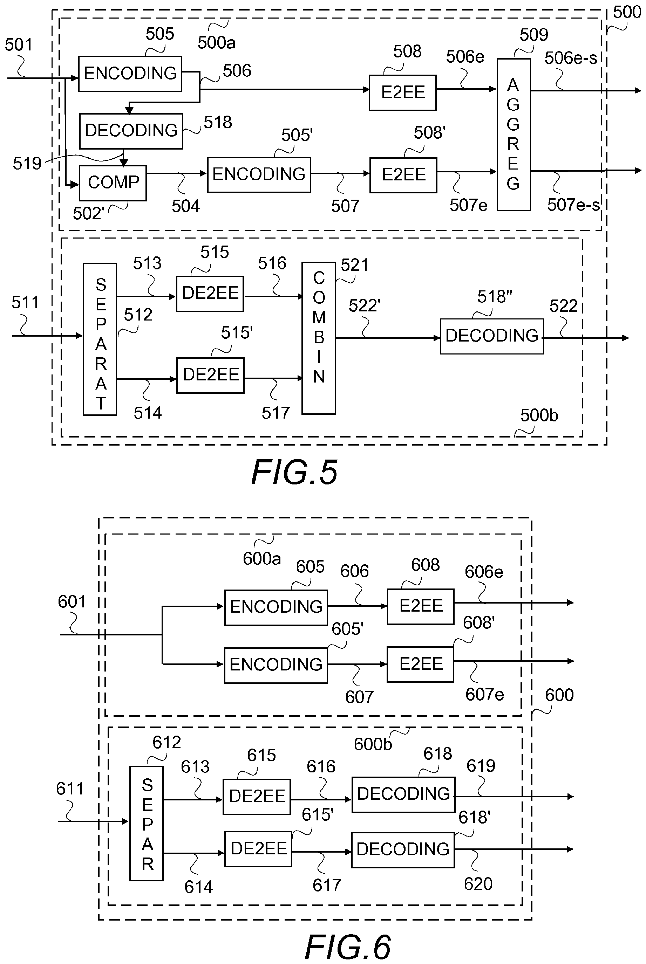

Figure 5 illustrates another exemplary basic structure for a codec 500 comprising an encoder side 500a for encoding user data that is to be transmitted and a decoder side 500b for decoding received user data. The codec illustrated in Figure 5 differs from the codec illustrated in Figure 3 by having in the encoder side 500a a decoding unit 518 and a comparing unit 502' (comp) instead of the divider and in the decoder side 400b the combiner unit 521 before the decoding unit 518".

In the encoder side 500a, when an input signal 501, i.e. voice or audio from a microphone, is received, it is encoded by a narrowband encoding unit 505, the result being a narrowband bit stream 506 in a narrowband speech format. Then the narrowband bit stream 506 is forwarded to an encryption unit 508 and to the decoding unit 518 configured to decode the narrowband speech format to a corresponding narrowband signal 519 which is inputted to the comparing unit 502'. The comparing unit 502' receives also the input signal 501 and is configured to compare the original input 501 to the narrowband signal 519 to generate an "add on" signal 504 comprising the difference between the original input and the narrowband signal, i.e. all the additional information (delta information) which is then encoded by a broadband encoding unit 505', the result being an "add on" bit stream 507 in a broadband speech format.

Both bit streams 506, 507 are encrypted separately by corresponding encryption units 508, 508' (E2EE), resulting to corresponding end-to-end encrypted bit streams 506e, 507e. The end-to-end encrypted bit streams are then aggregated by an aggregation unit 509 to a packet 510 and outputted to be forwarded to one or more recipient(s) providing a tiered speech item for a user data bit stream.

If instead of the mere basic structure functionality described above, the mode unit comprising the basic structure with additional configuration is implemented, the additional configuration is configured in response to receiving a command indicating at least "legacy only output", to disable or power down the decoding unit 518 and/or the comparing unit 502' and/or the encoding 505' of the "add on" bit stream 507, or instruct the aggregation unit 509 to output only the encrypted TETRA bit stream 506e instead of aggregating the two bit streams.

In the decoder side 500b, when a bit stream 511 is received, a separating unit 512 separates from a packet comprising a narrowband bit stream and an "add on" bit stream the different streams. The separation may be based on detecting a separating bit (or separating bits) in the packet, or then the part of the packet payload having a predetermined size corresponding to the size of a narrowband bit stream payload in the beginning of the payload is inputted as an end-to-end encrypted narrowband bit stream 513 to a decryption unit 515 (DE2EE), and the rest of the payload, if exists, is inputted as an end-to-end encrypted "add on" bit stream 514 to a decryption unit 515' (DE2EE). The separation unit is scheduled to input the different bit streams so that they reach a combiner unit 521 (combin) in the same time. However, it bears no significance where they synchronization is performed, it may be performed even in the combiner unit.

An end-to-end encrypted narrowband bit stream 513 is decrypted by the decryption unit 515 to a narrowband bit stream 516 in a narrowband format. Correspondingly, the "add on" bit stream 514, if such exits, is decrypted by the decryption unit 515' to an "add on" bit stream 517 in a broadband speech format. The narrowband bit stream 516 is then inputted to the combiner unit 521, which combines the narrowband bit stream 516 with a simultaneously received "add on" bit stream 517, if such a bit stream is received, and outputs a bit stream 522'. In other words, the bit stream 522' is either a combination of the narrowband bit stream and the "add on" bit stream, i.e. a higher quality bit stream, or a mere narrowband bit stream. The bit stream 522' is then decoded by a decoding unit 518" to a voice signal 522 that is outputted via loudspeakers, for example. The outputted voice signal 522 provides a high quality voice if the narrowband signal is combined with the information on "add on" signal. However, if the originator's user apparatus outputted only a narrowband bit stream, there is no "add on" signal to be combined to the narrowband signal by the combiner, and the outputted voice signal 522 has a basic quality.

It should be appreciated that a codec may comprise the encoder side illustrated with Figure 5 and the decoder side illustrated with Figure 3, or a codec may comprise the encoder side illustrated with Figure 3 and the decoder side illustrated with Figure 5.

In the above examples, the "add on" information may be the difference information, or a compressed difference information, or an enhanced compressed difference information obtained by using signal properties of the voice or data.

Figure 6 illustrates yet another exemplary basic structure for a codec 600 comprising an encoder side 600a for encoding user data that is to be transmitted and a decoder side 600b for decoding received user data. In the example it is assumed for the decoder side 600b that packets originating from the narrowband side and containing user data in the basic quality are filled with nil information (nils) to have a length corresponding to a length of a packet having user data payload in the broadband speech format. The nil information (nils) refers to information having no meaning, called also filler, filler bits, padding or padding bits . However, it should be appreciated that the nils may be added in the broadband side to indicate a basic quality packet, and a shorter length indicates that the packet originates from the narrowband side. Further, instead of the nils, or in addition to the nils, header information, like a flag in the header information, for example, may indicate that the packet originates from the narrowband side and/or from the broadband side.

In the encoder side 600a, when an input signal 601, i.e. voice or audio from a microphone, is received, it is outputted to two different encoding units 605, 605', one of the encoding units encoding the input signal to a narrowband bit stream 606 in a narrowband speech format and the other one 605' encoding the input signal to a broadband bit stream 607 in a broadband speech format. Both bit streams 606, 607 are encrypted separately by corresponding encryption units 608, 608' (E2EE), resulting to corresponding end-to-end encrypted bit streams 606e, 607e in corresponding packets and outputted to be forwarded to one or more recipient(s) providing a tiered speech item for a user data bit stream.

If instead of the mere basic structure functionality described above, the mode unit comprising the basic structure with additional configuration is implemented, the additional configuration is configured in response to receiving a command indicating at least "legacy only output", to disable or power down the encoding 605' of the user data to the LTE bit stream 607, the end result being that the mere narrowband form user data 606e is outputted.

In the decoder side 600b, when a bit stream 611 is received, a separating unit 612 (separ) determines the length of the received packet. If the length is less than a length of a packet having user data payload in the broadband speech format, the packet is discarded, because it is a packet corresponding to stream 606e and a packet corresponding to bit stream 607e having the same user data but providing a higher quality has been received or is soon to be received. If the packet is not discarded, the separating unit 612 then determines whether or not the packet is filled with filler bits. If the packet is filled with filler bits, the separating unit 612 forwards the packet without the filler bits as a narrowband bit stream 613 to a decryption unit 615 (DE2EE),which decrypts the end-to-end encrypted narrowband bit stream 613 to a narrowband bit stream 616 in a narrowband speech format. The narrowband bit stream 616 is then decoded by a decoding unit 618 from the narrowband speech format to a corresponding narrowband signal 619 with a basic quality. The narrowband signal 619 is then outputted as a voice signal via loudspeakers, for example. If the packet is not filled with filler bits, the separating unit 612 forwards the packet as a broadband bit stream 614 to a decryption unit 615' (DE2EE),which decrypts the end-to-end encrypted broadband bit stream 614 to a broadband bit stream 617 in a broadband speech format. The broadband bit stream 617 is then decoded by a decoding unit 618' from the broadband speech format to a corresponding broadband signal 620 with a higher quality. The broadband signal 620 is then outputted as a voice signal via loudspeakers, for example.

If instead of the mere basic structure functionality described above, the mode unit comprising the basic structure with additional configuration is implemented, the additional configuration is configured in response to receiving a command indicating at least "legacy only input", to disable or power down the separating unit 612 and forward the received bit stream as a narrowband bit stream 613.

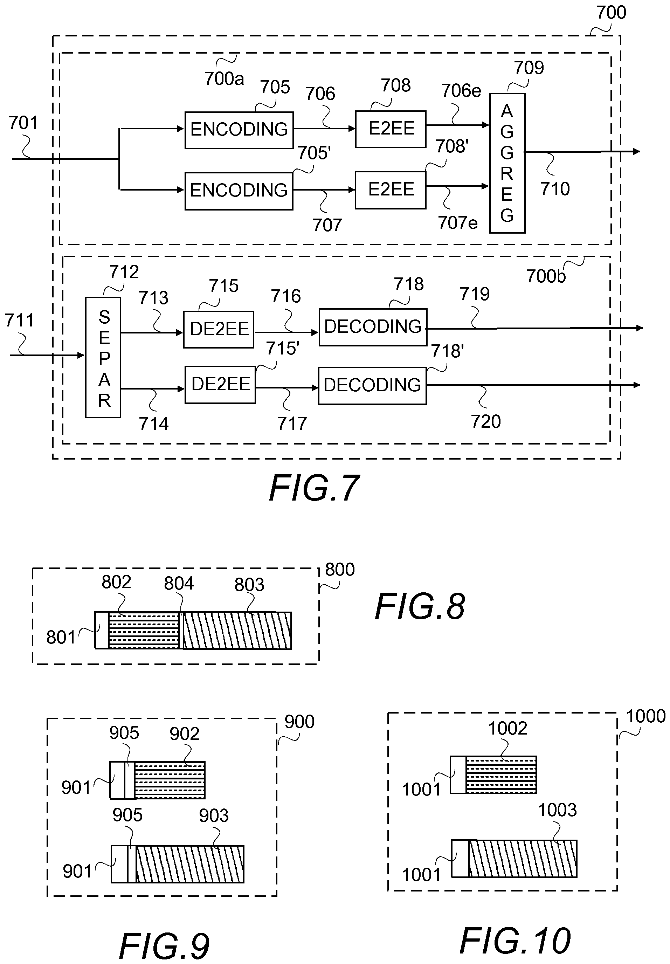

Figure 7 illustrates a further exemplary basic structure for a codec 700 comprising an encoder side 700a for encoding user data that is to be transmitted and a decoder side 700b for decoding received user data. The codec illustrated in Figure 7 differs from the codec illustrated in Figure 6 by having in the encoder side 700a an aggregation unit 709 (aggreg) to aggregate the bit streams (payloads).

In the encoder side 700a, when an input signal 701, i.e. voice or audio from a microphone, is received, it is outputted to two different encoding units 705, 705', one of the encoding units encoding the input signal to a narrowband bit stream 706 in a narrowband speech format and the other one 705' encoding the input signal to a broadband bit stream 707 in a broadband speech format. Both bit streams 706, 707 are encrypted separately by corresponding encryption units 708, 708' (E2EE), resulting to corresponding end-to-end encrypted bit streams 706e, 707e. The end-to-end encrypted bit streams are then aggregated by an aggregation unit 709 (aggreg) to a packet 710 and outputted to be forwarded to one or more recipient(s) providing a tiered speech item for a user data bit stream.

If instead of the mere basic structure functionality described above, the mode unit comprising the basic structure with additional configuration is implemented, the additional configuration is configured in response to receiving a command indicating at least "legacy only output", to disable or power down the encoding 705' of the user data to the LTE bit stream 707, the end result being that the mere narrowband form user data 706e is outputted, or instruct the aggregation unit 709 to output only the encrypted TETRA bit stream 706e instead of aggregating the two bit streams.

In the decoder side 700b, when a bit stream 711 is received, a separating unit 712 (separ) determines the length of the received packet. If the length equals to a length of a packet having user data payload in the narrowband speech format, the separating unit 712 forwards the packet as a narrowband bit stream 713 to a decryption unit 715 (DE2EE),which decrypts the end-to-end encrypted narrowband bit stream 713 to a narrowband bit stream 716 in a narrowband speech format. The narrowband bit stream 716 is then decoded by a decoding unit 718 from the narrowband speech format to a corresponding narrowband signal 719 with a basic quality. The narrowband signal 719 is then outputted as a voice signal via loudspeakers, for example. If the packet length is more than the length of a packet having user data payload in the narrowband speech format, the separating unit 712 removes from the beginning of the payload the amount of data corresponding to the user data payload in the narrowband speech format, or to a specific separating bit (or separating bits), and then forwards the rest of the payload, which is the user data payload in the broadband speech format as a broadband bit stream 714 to a decryption unit 715' (DE2EE),which decrypts the end-to-end encrypted broadband bit stream 714 to a broadband bit stream 717 in an broadband speech format. The broadband bit stream 717 is then decoded by a decoding unit 718' from the broadband speech format to a corresponding broadband signal 720 with a higher quality. The broadband signal 720 is then outputted as a voice signal via loudspeakers, for example.

If instead of the mere basic structure functionality described above, the mode unit comprising the basic structure with additional configuration is implemented, the additional configuration may be configured in response to receiving a command indicating at least "legacy only input", to disable the separating unit 712 and forward the received bit stream as a narrowband bit stream 713. However, the separating unit would in any case forward the legacy bit stream as the narrowband bit stream 713.

A codec based on Figure 6 or 7 may comprise instead of two decoding units one decoding unit configured to decode both the broadband format and the narrowband format.

It should be appreciated that encryption units in an encoder may use the same cipher, or different ciphers allowing a legacy encryption and updated encryption, for example, and decryption units in a decoder may use the same cipher or different ciphers, correspondingly.

As is evident from the above, forming the user data set causes no additional delay, since the payloads are ready substantially simultaneously if parallel processing is implemented or right after each other if serial processing is implanted in the encoder side.

It should be appreciated that the non-legacy user apparatus may comprise other codecs used in "only non-legacy" services and/or in "mere legacy quality" services.

As used herein, the term "codec" refers to a speech, video, audio, or other user data coding and/or decoding algorithm, process or apparatus that can be employed encode and/or decode user data. The codec can employ any compression and/or decompression algorithm to compress/decompress a received user data, it suffices that it is supported in the sending/receiving apparatuses.

Figures 8, 9, and 10 illustrate different examples of an encoded user data set, the example illustrated in Figure 8 representing a user data set corresponding to a user data set outputted as a data item 310 in Figure 3 or as a data item 510 in Figure 5 or as a data item 710 in Figure 7, the example illustrated in Figure 9 representing a data item corresponding to a data item outputted as as 206e-s and 207e-s in Figure 2 or as 406e-s and 407e-s in Figure 4, and the example illustrated in Figure 10 representing a data item outputted as 606e and 607e 610 in Figure 6.

Referring to Figure 8, the user data set 800 is a packet comprising a header part 801 and a payload part comprising a speech item 802 in a narrowband form, a separating bit (or separating bits) 804 and a speech item 803 in a broadband form, the speech item 803 comprising either the additional information to the basic quality of the speech item 802 or the same user data in a higher quality as is in the speech item 802, or if payload is filled with nil information, the speech item 803 comprises the nil information. It should be appreciated that in another example there is no separating bit between the two different payloads. In another implementation, the data item 801 may comprise a common header, the speech item in the narrowband form a "narrowband" header and the speech item in the broadband form a "broadband" header, i.e. the data item would comprise altogether three headers. Referring to Figure 9, the user data set 900 comprises two packets, both comprising a header part 901 and synchronizing information 905. The synchronization information may be part of the header, part of a footer of a corresponding packet, or separate information between the actual content and the header or the footer. The packets have different payloads. One of them has a payload comprising a speech item 902 in a narrowband form, whereas the payload in the other comprises a speech item 903 comprising the additional information to the basic quality of the speech item 902.

Referring to Figure 10, the user data set 1000 comprises two packets, both comprising a header part 1001 but are having different payloads. One of them has a payload comprising a speech item 1002 in a narrowband form, whereas the payload in the other comprises a speech item 1003 comprising the same user data as is in the speech item 1002 but in a higher quality.

Figures 11 and 12 are flow chart illustrating exemplary functionalities of a network apparatus comprising the packet adapter unit, or corresponding functionality providing interoperability between the narrowband and broadband systems. Figure 11 illustrates the functionality when the data item corresponds to a data item illustrated in Figure 8, and Figure 12, when the data item correspond to a data item illustrated either in Figure 9 or in Figure 10.

Referring to Figure 11, when a packet is received in step 1101 in the network apparatus, the network apparatus, or more precisely, the packet adapter unit, checks in step 1102, whether the packet was received from the narrowband infrastructure. If it was from the narrowband infrastructure, the packet adapter units adds in step 1103 a separating bit (or separating bits or a header) and nils (filler bits) to the packet, i.e. fills the payload with the filler bits, so that the packet length corresponds to the packet length used in the broadband infrastructure. Then the packet is forwarded in step 1104 to the broadband infrastructure.

If the packet was not from the narrowband infrastructure (step 1102), it is from the broadband infrastructure, and the network apparatus, or more precisely the packet adapter unit, removes in step 1105 the part of the payload after the separating bit(s) or a corresponding header, and the separating bit(s) and the corresponding header from the packet, the end result being a packet having the narrowband payload. Since the different parts of the payload were encrypted separately, there is no need to decrypt the payload before removing one or more parts of the payload as long as the remaining part of the payload have been encrypted separately from the removed part (should they have been encrypted together, the decryption of the remaining payload would fail). Hence it is possible to maintain the end-to-end encryption. Then the truncated packet, i.e. a data item in a narrowband format, is forwarded in step 1106 to the narrowband infrastructure.

In another example, where the broadband apparatuses support also packets in a mere narrowband format, i.e. without separating bit(s) and filler bits, step 1103 is omitted.

Further, it should be appreciated that if the implementation based on Figure 11 does not utilize separating bit(s), it is (they are) not added in step 1103 although filler bits are added, and in step 1105 the part which is removed is determined using other criteria, like the length of the payload in a narrowband format.

Referring to Figure 12, when a packet is received in step 1201 in the network apparatus, the network apparatus, or more precisely, the packet adapter unit, checks in step 1202, whether the packet was received from the narrowband infrastructure. If it was from the narrowband infrastructure, the packet is forwarded in step 1203 to the broadband infrastructure.

If the packet was not from the narrowband infrastructure (step 1202), it is from the broadband infrastructure, and the network apparatus, or more precisely the packet adapter unit, checks in step 1204, whether or not the packet is in a narrowband format. This check may be based on the length of the packet or information in the header or in the footer. If the packet is not in the narrowband format (step 1204), the packet is discarded in step 1205. In other words, a packet that contains either the "add on" information or user data in the broadband format is not forwarded to the narrowband infrastructure. If the packet is in the narrowband format (step 1204), the packet is forwarded in step 1206 to the narrowband infrastructure.

As is evident from the above, there is no need for the network apparatus to perform a transcoding from the narrowband format to the broadband format, and vice versa. It suffices that some information is not forwarded towards the narrowband infrastructure and, possible but not necessarily, some nil information is added before information received from the narrowband infrastructure is forwarded to the broadband infrastructure. Advantages provided by skipping the transcoding include that it saves processing capacity for other purposes, and speeds up the user data delivery process. A faster processing facilitates delivery of real-time user data. Further, if transcoding is used, the end-to-end encryption will not succeed, the content has to be decrypted so that it can be conversed from its format to another format properly, and therefore the transcoding is not appropriate for public safety use requiring end-to-end encryption as one security feature.

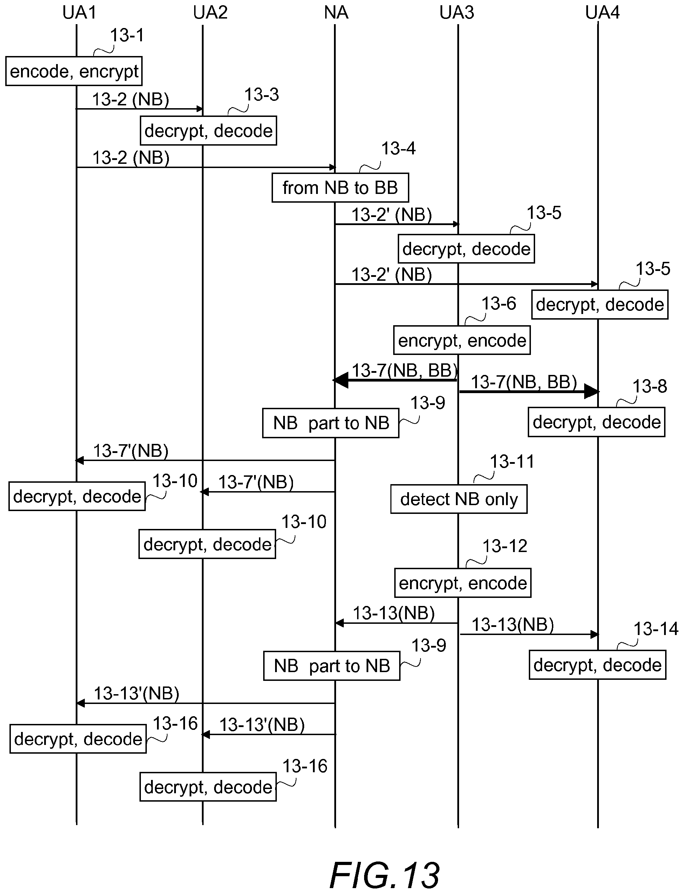

Figure 13 illustrates exemplary signalling between group members of a group call. In the illustrated example it is assumed that four group members have joined the group, two of them are using legacy (narrowband) user apparatuses UA1 and UA2 in a narrowband infrastructure and the other two are using broadband user apparatuses UA3 and UA4 that are configured to provide backward compatibility towards the legacy apparatuses without needing the nil information, i.e. they comprise one of the codecs described above with Figures 2 to 7. Further, in the illustrated example it is assumed that UA3 and UA4 both comprise the additional configuration of the mode unit. In the illustrated example the interoperability between the two infrastructures is provided by a network apparatus NA. It should be appreciated that also other network apparatuses are involved in the signalling but they are not illustrated herein for the sake of clarity, since their functionality is irrelevant for the actual invention and therefore they are not described in more detail here. Further, in the illustrated example it is assumed that the end-to-end encryption is used between the group members.

Referring to Figure 13, the user of UA1 has been granted a floor and the user has spoken. UA1 has encoded and encrypted in point 13-1 the speech signal into an encrypted speech item in a narrowband format, and the encrypted narrowband speech item NB is sent towards other group members in message 13-2.

The speech item is received by UA2 which decrypts and decodes the speech item in point 13-3 to a basic quality speech signal and outputs the speech signal to the user.

The speech item is also received by NA which detects in point 13-4 that the speech item is from the narrowband infrastructure and forwards the narrowband speech item in message 13-2' towards group members in the broadband infrastructure. The speech item is received by UA3 and UA4, each of which decrypts and decodes the speech item in point 13-5 to a basic quality speech signal and outputs the speech signal to the user.

Then the user of UA3 has been granted the floor and the user has spoken. UA3 has encoded and encrypted in point 13-6 the speech signal into a tiered speech item comprising an encrypted payload in a narrowband format and an encrypted payload in a broadband format and the tiered speech item comprising both payloads NB and BB is sent towards other group members in message 13-7.

The speech item is received by UA4 which decrypts and decodes the payloads in the speech item in point 13-8 to a higher quality speech signal and outputs the speech signal to the user.

The speech item is also received by NA which detects in point 13-9 that the speech item is from the broadband infrastructure, removes the encrypted payload in the broadband format from the tiered speech item, the end result being an encrypted speech item in the narrowband format, and forwards the encrypted speech item comprising only the payload in the narrowband format NB in message 13-7' towards group members in the narrowband infrastructure. The speech item is received by UA1 and UA2, each of which decrypts and decodes the speech item in point 13-10 to a basic quality speech signal and outputs the speech signal to the user.

Meanwhile UA3 detects in point 13-11 that it is commanded to use the narrowband mode only. UA3 may be configured to detect this based on the error rate UA3 measures, or because of battery charge is low, or UA3 may detect the "narrowband mode only" in response to receiving such a command via the infrastructure from another apparatus having rights to command UA3 or via user interface, or in response to receiving the information in the message granting the floor to UA3. Therefore the next speech item from the user's voice input is encoded and encrypted in point 13-12 to a tiered speech item comprising an encrypted payload in a narrowband format and the speech item comprising only payload NB is sent towards other group members in message 13-13.

The speech item is received by UA4 which decrypts and decodes the payloads in the speech item in point 13-14 to a basic quality speech signal and outputs the speech signal to the user.

The speech item is also received by NA which detects in point 13-15 that the speech item is from the broadband infrastructure, but already in the narrowband format, and NA forwards the encrypted speech item comprising only the payload in the narrowband format NB in message 13-13' towards group members in the narrowband infrastructure. The speech item is received by UA1 and UA2, each of which decrypts and decodes the speech item in point 13-16 to a basic quality speech signal and outputs the speech signal to the user.

As is evident from the above, users in the broadband infrastructure may discuss with each other with the higher quality signal and still the users in the narrowband infrastructure are able to participate to the discussion although with the basic quality unless otherwise instructed, if such a solution is implemented. In other words, the disclosed examples and implementations provide backward compatibility thereby allowing use of legacy user apparatuses (and groups) supporting basic quality user data and non-legacy user apparatuses (and groups) supporting higher quality user data. This has the advantage that the existing network infrastructure may be utilized while building network infrastructure of a next generation, and thereby it facilitates the migration.

Although in the above it is assumed that in the aggregated packet the payload comprises first the payload in the narrowband format, like TETRA speech format, and after the narrowband format the "add on" information or the payload in the broadband format, like LTE speech format, one should appreciate that the payload in the narrowband format may form the last part of the payload in the aggregated packet.

The steps/points, messages and related functions described above in Figures 11, 12 and 13 are in no absolute chronological order, and some of the steps/points may be performed simultaneously or in an order differing from the given one. Other functions can also be executed between the steps/points or within the steps/points. For example, the network apparatus may be configured in point 13-4 and/or in point 13-9 to change encapsulation of the message to be according to the encapsulation in the network whereto the message is forwarded. Some of the steps/points or part of the steps/points can also be left out or replaced by a corresponding step/point or part of the step/point. For example, it should be appreciated that the examples are implementable without end-to-end encryption, i.e. in situations/solutions in which no end-to-end encryption is used by simply leaving corresponding steps out.The messages are only exemplary and may even comprise several separate messages for transmitting the same information.

The techniques described herein may be implemented by various means so that an apparatus implementing one or more functions of a corresponding apparatus described with an embodiment/example/implementation comprises not only prior art means, but also means for implementing the one or more functions of a corresponding apparatus described with an embodiment and it may comprise separate means for each separate function, or means may be configured to perform two or more functions. For example, the packet adapting unit, and/or the codec(s) may be software and/or software-hardware and/or hardware and/or firmware components (recorded indelibly on a medium such as read-only-memory or embodied in hard-wired computer circuitry) or combinations thereof. Software codes may be stored in any suitable, processor/computer/apparatus-readable data storage medium(s) or memory unit(s) or article(s) of manufacture and executed by one or more processors/computers, hardware (one or more apparatuses), firmware (one or more apparatuses), software (one or more modules), or combinations thereof. For a firmware or software, implementation can be through modules (e.g., procedures, functions, and so on) that perform the functions described herein. Software codes may be stored in any suitable, processor/computer-readable data storage medium(s) or memory unit(s) or article(s) of manufacture and executed by one or more processors/computers.

Figure 14 is a simplified block diagram illustrating some units for an apparatus 1400 configured to a network apparatus comprising the packet adapter unit, or corresponding functionality providing the interoperability between different infrastructures. In the illustrated example, the apparatus comprises two or more interfaces (IF) 1401, 1401' for receiving and transmitting information, at least one interface for information exchange with a first infrastructure, like the narrowband infrastructure described above, and at least one interface for information exchange with a second infrastructure, like the broadband infrastructure described above, a processor 1402 configured to implement at least the packet adapter unit functionality/functionalities described herein with a network apparatus, with corresponding algorithms 1403, and memory 1404 usable for storing a program code required for the packet adapter unit and the algorithms. The memory 1404 is also usable for storing other possible information, like the length of a data item in the first infrastructure and/or in the second infrastructure.

Figure 15 is a simplified block diagram illustrating some units for an apparatus 1500 configured to be a non-legacy user apparatus, i.e. an apparatus comprising at least one of the codecs described above. In the illustrated example the apparatus comprises one or more interfaces (IF) 1501 for receiving and transmitting information over the corresponding infrastructure, like the broadband infrastructure, one or more user interfaces (U-IF) 1501' for interaction with a user, a processor 1502 configured to implement at least the codec functionality described herein with a corresponding algorithm/algorithms 1503 and a memory 1504 usable for storing a program code required at least for the codec. The processor 1502 may be further configured to implement the additional configuration from the mode unit and the memory is usable for storing the program code required for the additional configuration, and possible rules and temporary information relating to rules. The memory 1504 is also usable for storing other possible information, like the length of a data item in the first infrastructure and/or in the second infrastructure.

In other words, an apparatus configured to provide the non-legacy user apparatus, and/or an apparatus configured to provide the network apparatus, or an apparatus configured to provide one or more corresponding functionalities, is a computing device that may be any apparatus or device or equipment configured to perform one or more of corresponding apparatus functionalities described with an embodiment/example/implementation, and it may be configured to perform functionalities from different embodiments/examples/ implementations. The unit(s) described with an apparatus may be separate units, even located in another physical apparatus, the distributed physical apparatuses forming one logical apparatus providing the functionality, or integrated to another unit in the same apparatus.

More precisely, an apparatus configured to provide the non-legacy user apparatus, and/or an apparatus configured to provide the network apparatus, and/or an apparatus configured to provide one or more corresponding functionalities, may generally include a processor, controller, control unit, micro-controller, or the like connected to a memory and to various interfaces of the apparatus. Generally the processor is a central processing unit, but the processor may be an additional operation processor. Each or some or one of the units and/or codecs and/or algorithms described herein may be configured as a computer or a processor, or a microprocessor, such as a single-chip computer element, or as a chipset, including at least a memory for providing storage area used for arithmetic operation and an operation processor for executing the arithmetic operation. Each or some or one of the units and/or codecs and/or algorithms described above may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions or calculations of one or more embodiments. In other words, each or some or one of the units and/or the codecs and/or the algorithms described above may be an element that comprises one or more arithmetic logic units, a number of special registers and control circuits.

Further, an apparatus implementing functionality or some functionality according to an embodiment/example/implementation of an apparatus configured to provide the non-legacy user apparatus, and/or an apparatus configured to provide the network apparatus, or an apparatus configured to provide one or more corresponding functionalities, may generally include volatile and/or non-volatile memory, for example EEPROM, ROM, PROM, RAM, DRAM, SRAM, double floating-gate field effect transistor, firmware, programmable logic, etc. and typically store content, data, or the like. The memory or memories may be of any type (different from each other), have any possible storage structure and, if required, being managed by any database/memory management system. The memory may also store computer program code such as software applications (for example, for one or more of the units/algorithms/codecs) or operating systems, information, data, content, or the like for the processor to perform steps associated with operation of the apparatus in accordance with examples/embodiments. The memory, or part of it, may be, for example, random access memory, a hard drive, or other fixed data memory or storage device implemented within the processor/apparatus or external to the processor/apparatus in which case it can be communicatively coupled to the processor/network node via various means as is known in the art. An example of an external memory includes a removable memory detachably connected to the apparatus.

In addition, an apparatus implementing functionality or some functionality according to an embodiment/example/implementation of an apparatus configured to provide the non-legacy user apparatus, and/or an apparatus configured to provide the network apparatus, or an apparatus configured to provide one or more corresponding functionalities, may generally comprise different interface units, such as one or more receiving units for receiving user data, control information, requests and responses, for example, and one or more sending units for sending user data, control information, responses and requests, for example. The receiving unit and the transmitting unit each provides an interface in an apparatus, the interface including a transmitter and/or a receiver or any other means for receiving and/or transmitting information, and performing necessary functions so that content and other user data, control information, etc. can be received and/or transmitted. The receiving and sending units may comprise a set of antennas, the number of which is not limited to any particular number.

Further, an apparatus implementing functionality or some functionality according to an embodiment/example/implementation of an apparatus configured to provide the non-legacy user apparatus, and/or an apparatus configured to provide the network apparatus, or an apparatus configured to provide one or more corresponding functionalities, may comprise other units.

Although in the above examples it is assumed that two different infrastructures are involved, and hence two different types of payloads are generated from a user data, one in the art is able to implement the above described solutions when three or more different infrastructures are involved thereby possibly requiring three or more different payloads to form a user data set.

It will be obvious to a person skilled in the art that, as the technology advances, the inventive concept can be implemented in various ways. The invention and its embodiments are not limited to the examples described above but may vary within the scope of the claims.

## Claims

1. A method for encoding a user data signal, the method comprising:
receiving (201, 301, 401, 501, 601, 701) in an encoder a user data signal;
encoding (205, 205', 305, 305', 405, 405', 505, 505', 605, 605', 705, 705'), by the encoder, the user data signal at least to two separate payloads, so that a first payload provides a basic quality, which is supported by legacy user apparatuses, and a second payload provides a higher quality, which is not supported by the legacy user apparatuses;
**characterized by**
providing end-to-end encryption between an apparatus comprising the encoder and one or more recipients by encrypting (208, 208', 308, 308', 408, 408', 508, 508', 608, 608', 708, 708') the first payload by a first encryption unit in the encoder and the second payload by a second encryption unit in the encoder;
forming, by the encoder, from the at least two encrypted separate payloads a user data set (206e-s, 207e-s, 310, 406e-s, 407e-sm 506e-s, 507e-s, 606, 607, 710) representing the received user data signal; and
sending the user data set towards the one or more recipients.

2. A method as claimed in claim 1, the method further comprising:
forming a packet (800) comprising at least the encrypted first payload and the encrypted second payload; and
sending the packet as the user data set.

3. A method as claimed in claim 1, the method further comprising:
forming at least a first packet for the encrypted first payload and a second packet for the encrypted second payload; and
sending at least the first packet and the second packet as the user data set (900, 1000).

4. A method as claimed in claim 3, the method further comprising synchronizing (209, 409) at least the first packet and the second packet to each other before sending.

5. A method as claimed in any of the preceding claims, wherein the encoding comprises either encoding the received user data signal to a first format forming the first payload, and encoding pieces of information in the user data signal that are not included in the first payload to the second payload; or encoding the received user data signal to a first format forming the first payload and to a second format forming the second payload.

6. A method as claimed in any one of the preceding claims, the method further comprising:
detecting (13-11) that only the basic quality should be used; and
sending (13-13), in response to the detecting, the encrypted first payload instead of the user data set.

7. A method as claimed in any one of the preceding claims, the method further comprising:
receiving a user data set comprising at least the encrypted first payload and the encrypted second payload;
decrypting (215, 215', 315, 315', 415, 415', 515, 515', 615, 615', 715, 715') the first payload and the second payload separately; and
if the second payload comprises pieces of information that are not included in the first payload, either decoding (218, 218', 318, 318') the first payload to a first user data signal providing a basic quality and the second payload to a second user data signal, and combining (221, 321) the first user data signal and the second user data signal to form a higher quality user data signal; or combining (421, 521) the first payload and the second payload to form a higher quality user data payload, decoding (418", 518") the higher quality user data payload to form a higher quality user data signal.

8. A method as claimed in any one of the preceding claims 1 to 6, the method further comprising:
receiving (611, 711) a user data set comprising at least the encoded first payload and the encoded second payload;
discarding the first payload;
decrypting (615', 715') the second payload; and
decoding (618', 718') the second payload to a user data signal providing the higher quality.

9. A method as claimed in any one of the preceding claims, the method further comprising:
in response to receiving user data, checking whether or not the user data is a user data set comprising the encrypted first payload and an encrypted second payload;
in response to detecting that the received user data is not a user data set comprising the encrypted first payload and an encrypted second payload, decrypting (615, 715) the received user data as the first payload, decoding (618, 718) the first payload to a user data signal providing a basic quality, and outputting (619, 719) the user data signal providing the basic quality.

10. A method for decoding a user data set **characterized by** the method comprising:
receiving (211, 311, 411, 511) in an decoder a user data set comprising at least an encrypted first payload providing a basic quality, which is supported by legacy user apparatuses, and an encrypted second payload providing a higher quality and comprising pieces of information that are not included in the first payload, the higher quality not being supported by the legacy user apparatuses;
decrypting (215, 215', 315, 315', 415, 415', 515, 515') the first payload by a first decrypting unit in the decoder and the second payload by a second decrypting unit in the decoder;
decoding, by the decoder, (218, 218', 318, 318') the first payload to a first user data signal providing a basic quality and the second payload to a second user data signal, and combining (221, 321) the first user data signal and the second user data signal to form a higher quality user data signal; or
combining, by the decoder, (421, 521) the first payload and the second payload to form a higher quality user data payload, and decoding (418, 418', 518, 518') the higher quality user data payload to form a higher quality user data signal.

11. A method for decoding and discarding **characterized by** the method comprising:
receiving (611, 711) in a decoder a user data set comprising at least an encrypted first payload providing a basic quality, which is supported by legacy user apparatuses, and an encrypted second payload providing a higher quality, which is not supported by the legacy user apparatuses;
discarding, by the decoder, the encrypted first payload;
decrypting (615', 715') by a decrypting unit in the decoder the encrypted second payload; and
decoding (618', 718') by the decoder the decrypted second payload to a user data signal providing the higher quality.

12. A method for forwarding data **characterized by** the method comprising:
in response to receiving (13-7) in a network apparatus a user data set comprising at least an encrypted first payload providing a basic quality, which is supported by legacy user apparatuses, and an encrypted second payload providing a higher quality, which is not supported by the legacy user apparatuses, checking, (13-9) by the network apparatus whether or not the user data set is to be forwarded towards a first infrastructure configured to support only the basic quality, and if the user data set is to be forwarded towards the first infrastructure, discarding (13-9) by the network apparatus the encrypted second payload from the user data set and forwarding (13-7') the encrypted first payload as user data instead of the user data set to the first infrastructure;
in response to receiving (13-2) in the network apparatus user data comprising the encrypted first payload providing the basic quality, checking (13-4) by the network apparatus whether or not the user data is to be forwarded towards a second infrastructure configured to support the basic quality and the higher quality, if the user data is to be forwarded towards the second infrastructure, forwarding (13-2') by the network apparatus the user data to the second infrastructure, or adding (1103) by the network apparatus to the encrypted first payload one or more filler bits so that the length of the user data corresponds to a length of a user data for the higher quality, and forwarding (1104) the user data containing the filler bits and the encrypted first payload to the second infrastructure.

13. A computer program product comprising computer program code configured to perform a method as claimed in any one of the claims 1 to 12 when executed on an apparatus.

14. An apparatus (121, 121') comprising means for implementing a method as claimed in any of claims 1 to 12.

15. A telecommunications system (100) comprising:
a first network (110), which is a legacy network supporting a basic quality for user data;
a second network (120), which is a non-legacy network, supporting the basic quality for user data and a higher quality for user data;
an end user apparatus (111, 111'), which is a legacy user apparatus configured to operate in the first network and comprising means for encoding and encrypting a user data signal to a user data providing the basic quality, means for sending the user data, means for receiving a user data comprising encrypted encoded payload providing the basic quality, and means for decrypting and decoding the payload to a user data signal having the basic quality;
**characterized by** the system comprising:
a network node (130) configured to comprise means for implementing a method as claimed in claim 12; and
an end user apparatus (121, 121'), which is a non-legacy user apparatus configured to operate in the second network and comprising means for implementing a method as claimed in any of claims 1 to 11.

## Patentansprüche

1. Verfahren zum Codieren eines Benutzerdatensignals, wobei das Verfahren umfasst:
Empfangen (201, 301, 401, 501, 601, 701) eines Benutzerdatensignals in einem Encoder;
Codieren (205, 205', 305, 305', 405, 405', 505, 505', 605, 605', 705, 705') des Benutzerdatensignals durch den Encoder in wenigstens zwei getrennte Nutzlasten, so dass eine erste Nutzlast eine Basisqualität bereitstellt, die von Legacy-Benutzervorrichtungen unterstützt wird, und eine zweite Nutzlast eine höhere Qualität bereitstellt, die von den Legacy-Benutzervorrichtungen nicht unterstützt wird;
**gekennzeichnet durch**
Bereitstellen von Ende-zu-Ende-Verschlüsselung zwischen einer Vorrichtung, die den Encoder umfasst, und einem oder mehreren Empfängern durch Verschlüsseln (208, 208', 308, 308', 408, 408', 508, 508', 608, 608', 708, 708') der ersten Nutzlast durch eine erste Verschlüsselungseinheit im Encoder und der zweiten Nutzlast durch eine zweite Verschlüsselungseinheit im Encoder;
Bilden eines Benutzerdatensatzes (206e-s, 207e-s, 310, 406e-s, 407e-sm 506e-s, 507e-s, 606, 607, 710), der das empfangene Benutzerdatensignal darstellt, durch den Encoder aus den wenigstens zwei verschlüsselten getrennten Nutzlasten; und
Senden des Benutzerdatensatzes an den einen oder die mehreren Empfänger.

2. Verfahren nach Anspruch 1, wobei das Verfahren ferner umfasst:
Bilden eines Pakets (800), das wenigstens die verschlüsselte erste Nutzlast und die verschlüsselte zweite Nutzlast umfasst; und
Senden des Pakets als den Benutzerdatensatz.

3. Verfahren nach Anspruch 1, wobei das Verfahren ferner umfasst:
Bilden wenigstens eines ersten Pakets für die verschlüsselte erste Nutzlast und eines zweiten Pakets für die verschlüsselte zweite Nutzlast; und
Senden wenigstens des ersten Pakets und des zweiten Pakets als den Benutzerdatensatz (900, 1000).

4. Verfahren nach Anspruch 3, wobei das Verfahren ferner ein Synchronisieren (209, 409) wenigstens des ersten Pakets und des zweiten Pakets miteinander vor dem Senden umfasst.

5. Verfahren nach einem der vorhergehenden Ansprüche, wobei das Codieren entweder Codieren des empfangenen Benutzerdatensignals in ein erstes Format, das die erste Nutzlast bildet, und Codieren von Informationselementen im Benutzerdatensignal, die in der ersten Nutzlast nicht enthalten sind, in die zweite Nutzlast; oder Codieren des empfangenen Benutzerdatensignals in ein erstes Format, das die erste Nutzlast bildet, und in ein zweites Format, das die zweite Nutzlast bildet, umfasst.

6. Verfahren nach einem der vorhergehenden Ansprüche, wobei das Verfahren ferner umfasst:
Erkennen (13-11), dass nur die Basisqualität verwendet werden sollte; and
Senden (13-13) der verschlüsselten ersten Nutzlast anstelle des Benutzerdatensatzes in Reaktion auf das Erkennen.

7. Verfahren nach einem der vorhergehenden Ansprüche, wobei das Verfahren ferner umfasst:
Empfangen eines Benutzerdatensatzes, der wenigstens die verschlüsselte erste Nutzlast und die verschlüsselte zweite Nutzlast umfasst;
separates Entschlüsseln (215, 215', 315, 315', 415, 415', 515, 515', 615, 615', 715, 715') der ersten Nutzlast und der zweiten Nutzlast; und,
wenn die zweite Nutzlast Informationselemente enthält, die in der ersten Nutzlast nicht enthalten sind, entweder Decodieren (218, 218', 318, 318') der ersten Nutzlast in ein erstes Benutzerdatensignal, das eine Basisqualität bereitstellt, und der zweiten Nutzlast in ein zweites Benutzerdatensignal, und Kombinieren (221, 321) des ersten Benutzerdatensignals und des zweiten Benutzerdatensignals, um ein Benutzerdatensignal höherer Qualität zu bilden; oder Kombinieren (421, 521) der ersten Nutzlast und der zweiten Nutzlast, um eine Benutzerdatennutzlast höherer Qualität zu bilden, Decodieren (418", 518") der Benutzerdatennutzlast höherer Qualität, um ein Benutzerdatensignal höherer Qualität zu bilden.

8. Verfahren nach einem der vorhergehenden Ansprüche 1 bis 6, wobei das Verfahren ferner umfasst:
Empfangen (611, 711) eines Benutzerdatensatzes, der wenigstens die codierte erste Nutzlast und die codierte zweite Nutzlast umfasst;
Verwerfen der ersten Nutzlast;
Entschlüsseln (615', 715') der zweiten Nutzlast; und
Decodieren (618', 718') der zweiten Nutzlast in ein Benutzerdatensignal, das die höhere Qualität bereitstellt.

9. Verfahren nach einem der vorhergehenden Ansprüche, wobei das Verfahren ferner umfasst:
Prüfen, ob die Benutzerdaten in einem Benutzerdatensatz die verschlüsselte erste Nutzlast und eine verschlüsselte zweite Nutzlast umfassen oder nicht, in Reaktion auf den Empfang von Benutzerdaten;
Entschlüsseln (615, 715) in Reaktion auf ein Erkennen, dass es sich bei empfangenen Benutzerdaten nicht um einen Benutzerdatensatz handelt, der die verschlüsselte erste Nutzlast und eine verschlüsselte zweite Nutzlast umfasst, der empfangenen Benutzerdaten als die erste Nutzlast, Decodieren (618, 718) der ersten Nutzlast in ein Benutzerdatensignal, das eine Basisqualität bereitstellt, und Ausgeben (619, 719) des Benutzerdatensignals, das die Basisqualität bereitstellt.

10. Verfahren zum Decodieren eines Benutzerdatensatzes, **dadurch gekennzeichnet, dass** das Verfahren umfasst:
Empfangen (211, 311, 411, 511) in einem Decoder eines Benutzerdatensatzes, der wenigstens eine verschlüsselte erste Nutzlast, die eine Basisqualität bereitstellt, die von Legacy-Benutzervorrichtungen unterstützt wird, und eine verschlüsselte zweite Nutzlast umfasst, die eine höhere Qualität bereitstellt und Informationselemente umfasst, die in der ersten Nutzlast nicht enthalten sind, wobei die höhere Qualität von den Legacy-Benutzervorrichtungen nicht unterstützt wird;
Entschlüsseln (215, 215', 315, 315', 415, 415', 515, 515') der ersten Nutzlast durch eine erste Entschlüsselungseinheit im Decoder und der zweiten Nutzlast durch eine zweite Entschlüsselungseinheit im Decoder;
Decodieren durch den Decoder (218, 218', 318, 318') der ersten Nutzlast in ein erstes Benutzerdatensignal, das eine Basisqualität bereitstellt, und der zweiten Nutzlast in ein zweites Benutzerdatensignal, und Kombinieren (221, 321) des ersten Benutzerdatensignal und des zweiten Benutzerdatensignals, um ein Benutzerdatensignal höherer Qualität zu bilden; oder
Kombinieren durch den Decoder (421, 521) der ersten Nutzlast und der zweiten Nutzlast, um eine Benutzerdatennutzlast höherer Qualität zu bilden, und Decodieren (418, 418', 518, 518') der Benutzerdatennutzlast höherer Qualität, um ein Benutzerdatensignal höherer Qualität zu bilden.

11. Verfahren zum Decodieren und Verwerfen, **dadurch gekennzeichnet, dass** das Verfahren umfasst:
Empfangen (611, 711) in einem Decoder eines Benutzerdatensatzes, der wenigstens eine verschlüsselte erste Nutzlast, die eine Basisqualität bereitstellt, die von Legacy-Benutzervorrichtungen unterstützt wird, und eine verschlüsselte zweite Nutzlast umfasst, die eine höhere Qualität bereitstellt, die von den Legacy-Benutzervorrichtungen nicht unterstützt wird;
Verwerfen der verschlüsselten ersten Nutzlast durch den Decoder;
Entschlüsseln (615', 715') der verschlüsselten zweiten Nutzlast durch eine Entschlüsselungseinheit im Decoder; und
Decodieren (618', 718') der verschlüsselten zweiten Nutzlast durch den Decoder in ein Benutzerdatensignal, das die höhere Qualität bereitstellt.

12. Verfahren zum Weiterleiten von Daten, **dadurch gekennzeichnet, dass** das Verfahren umfasst:
in Reaktion auf ein Empfangen (13-7) eines Benutzerdatensatzes in der Netzwerkvorrichtung, der wenigstens eine verschlüsselte erste Nutzlast, die eine Basisqualität bereitstellt, die von Legacy-Benutzervorrichtungen unterstützt wird, und eine verschlüsselte zweite Nutzlast umfasst, die eine höhere Qualität bereitstellt, die von den Legacy-Benutzervorrichtungen nicht unterstützt wird, Prüfen (13-9) durch die Netzwerkvorrichtung, ob der erste Benutzerdatensatz zu einer ersten Infrastruktur, die nur die Basisqualität unterstützt, weitergeleitet werden soll oder nicht, und Verwerfen (13-9), wenn der Benutzerdatensatz zur ersten Infrastruktur weitergeleitet werden soll, der verschlüsselten zweiten Nutzlast durch die Netzwerkvorrichtung aus dem Benutzerdatensatz und Weiterleiten (13-7') der verschlüsselten ersten Nutzlast als Benutzerdaten anstelle des Benutzerdatensatzes zur ersten Infrastruktur;
in Reaktion auf ein Empfangen (13-2) von Benutzerdaten, welche die verschlüsselte erste Nutzlast umfassen, welche die Basisqualität bereitstellt, in der Netzwerkvorrichtung Prüfen (13-4) durch die Netzwerkvorrichtung, ob die Benutzerdaten zu einer zweiten Infrastruktur, welche die Basisqualität und die höhere Qualität unterstützt, weitergeleitet werden sollen oder nicht, und Weiterleiten (13-2'), wenn die Benutzerdaten zur zweiten Infrastruktur weitergeleitet werden sollen, der Benutzerdaten durch die Netzwerkvorrichtung zur zweiten Infrastruktur oder Hinzufügen (1103) eines oder mehrerer Füllbits durch die Netzwerkvorrichtung zur verschlüsselten ersten Nutzlast, damit die Länge der Benutzerdaten einer Länge von Benutzerdaten für die höhere Qualität entspricht, und Weiterleiten (1104) der Benutzerdaten mit den Füllbits und der verschlüsselten ersten Nutzlast zur zweiten Infrastruktur.

13. Computerprogrammprodukt, umfassend Computerprogrammcode, der so konfiguriert ist, dass er bei Ausführung auf einer Vorrichtung ein Verfahren nach einem der Ansprüche 1 bis 12 durchführt.

14. Vorrichtung (121, 121'), umfassend Mittel zum Implementieren eines Verfahrens nach einem der Ansprüche 1 bis 12.

15. Telekommunikationssystem (100), umfassend:
ein erstes Netzwerk (110), das ein Legacy-Netzwerk ist, das eine Basisqualität für Benutzerdaten unterstützt;
ein zweites Netzwerk (120), das ein Nicht-Legacy-Netzwerk ist, das die Basisqualität für Benutzerdaten und eine höhere Qualität für Benutzerdaten unterstützt;
eine Endbenutzervorrichtung (111, 111'), die eine Legacy-Benutzervorrichtung ist, die so konfiguriert ist, dass sie im ersten Netzwerk funktioniert und Mittel zum Codieren und Verschlüsseln eines Benutzerdatensignals in Benutzerdaten, welche die Basisqualität bereitstellen, Mittel zum Senden der Benutzerdaten, Mittel zum Empfangen von Benutzerdaten, die eine verschlüsselte codierte Nutzlast umfassen, welche die Basisqualität bereitstellt, und Mittel zum Entschlüsseln und Decodieren der Nutzlast in ein Benutzerdatensignal mit der Basisqualität umfasst;
**dadurch gekennzeichnet, dass** das System umfasst:
einen Netzwerkknoten (130), der so konfiguriert ist, dass er Mittel zum Implementieren eines Verfahrens nach Anspruch 12 umfasst; und
eine Endbenutzervorrichtung (121, 121'), die eine Nicht-Legacy-Benutzervorrichtung ist, die so konfiguriert ist, dass sie im zweiten Netzwerk funktioniert und Mittel zum Implementieren eines Verfahrens nach einem der Ansprüche 1 bis 11 umfasst.

## Revendications

1. Procédé pour encoder un signal de données d'utilisateur, le procédé comprenant :
la réception (201, 301, 401, 501, 601, 701) dans un encodeur d'un signal de données d'utilisateur ;
l'encodage (205, 205', 305, 305', 405, 405', 505, 505', 605, 605', 705, 705'), par l'encodeur, du signal de données d'utilisateur au moins en deux charges utiles séparées, de sorte qu'une première charge utile fournisse une qualité de base, qui est supportée par des appareils d'utilisateurs existants, et qu'une seconde charge utile fournisse une qualité supérieure, qui n'est pas supportée par les appareils d'utilisateurs existants ;
**caractérisé par**
la fourniture d'un chiffrement de bout en bout entre un appareil comprenant l'encodeur et un ou plusieurs destinataires en chiffrant (208, 208', 308, 308', 408, 408', 508, 508', 608, 608', 708, 708') la première charge utile par une première unité de chiffrement dans l'encodeur et la seconde charge utile par une seconde unité de chiffrement dans l'encodeur ;
la formation, par l'encodeur, à partir des au moins deux charges utiles séparées chiffrées d'un ensemble de données d'utilisateur (206e-s, 207e-s, 310, 406e-s, 407e-sm 506e-s, 507e-s, 606, 607, 710) représentant le signal de données d'utilisateur reçu ; et
l'envoi de l'ensemble de données d'utilisateur vers les un ou plusieurs destinataires.

2. Procédé selon la revendication 1, le procédé comprenant en outre :
la formation d'un paquet (800) comprenant au moins la première charge utile chiffrée et la seconde charge utile chiffrée ; et
l'envoi du paquet en tant qu'ensemble de données d'utilisateur.

3. Procédé selon la revendication 1, le procédé comprenant en outre :
la formation d'au moins un premier paquet pour la première charge utile chiffrée et d'un second paquet pour la seconde charge utile chiffrée ; et
l'envoi au moins du premier paquet et du second paquet en tant qu'ensemble de données d'utilisateur (900, 1000).

4. Procédé selon la revendication 3, le procédé comprenant en outre la synchronisation (209, 409) au moins du premier paquet et du second paquet l'un avec l'autre avant l'envoi.

5. Procédé selon l'une quelconque des revendications précédentes, dans lequel l'encodage comprend soit l'encodage du signal de données d'utilisateur reçu en un premier format formant la première charge utile, et l'encodage d'éléments d'information dans le signal de données d'utilisateur qui ne sont pas inclus dans la première charge utile en la seconde charge utile ; ou l'encodage du signal de données d'utilisateur reçu en un premier format formant la première charge utile et en un second format formant la seconde charge utile.

6. Procédé selon l'une quelconque des revendications précédentes, le procédé comprenant en outre :
la détection (13-11) que seule la qualité de base doit être utilisée ; et
l'envoi (13-13), en réponse à la détection, de la première charge utile chiffrée au lieu de l'ensemble de données d'utilisateur.

7. Procédé selon l'une quelconque des revendications précédentes, le procédé comprenant en outre :
la réception d'un ensemble de données d'utilisateur comprenant au moins la première charge utile chiffrée et la seconde charge utile chiffrée ;
le déchiffrement (215, 215', 315, 315', 415, 415', 515, 515', 615, 615', 715, 715') de la première charge utile et de la seconde charge utile séparément ; et
si la seconde charge utile comprend des éléments d'information qui ne sont pas inclus dans la première charge utile, soit le décodage (218, 218', 318, 318') de la première charge utile en un premier signal de données d'utilisateur fournissant une qualité de base et de la seconde charge utile en un second signal de données d'utilisateur, et la combinaison (221, 321) du premier signal de données d'utilisateur et du second signal de données d'utilisateur pour former un signal de données d'utilisateur de qualité supérieure ; soit la combinaison (421, 521) de la première charge utile et de la seconde charge utile pour former une charge utile de données d'utilisateur de qualité supérieure, le décodage (418", 518") de la charge utile de données utilisateur de qualité supérieure pour former un signal de données d'utilisateur de qualité supérieure.

8. Procédé selon l'une quelconque des revendications 1 à 6 précédentes, le procédé comprenant en outre :
la réception (611, 711) d'un ensemble de données d'utilisateur comprenant au moins la première charge utile encodée et la seconde charge utile encodée ;
le rejet de la première charge utile ;
le déchiffrement (615', 715') de la second charge utile ; et
le décodage (618', 718') de la seconde charge utile en un signal de données d'utilisateur fournissant la qualité supérieure.

9. Procédé selon l'une quelconque des revendications précédentes, le procédé comprenant en outre :
en réponse à la réception de données d'utilisateur, la vérification de si oui ou non les données d'utilisateur sont un ensemble de données d'utilisateur comprenant la première charge utile chiffrée et une seconde charge utile chiffrée ;
en réponse à la détection que les données d'utilisateur reçues ne sont pas un ensemble de données d'utilisateur comprenant la première charge utile chiffrée et une seconde charge utile chiffrée, le déchiffrement (615, 715) des données d'utilisateur reçues en tant que première charge utile, le décodage (618, 718) de la première charge utile en un signal de données d'utilisateur fournissant une qualité de base, et la sortie (619, 719) du signal de données d'utilisateur fournissant la qualité de base.

10. Procédé pour décoder un ensemble de données d'utilisateur, **caractérisé par** le procédé comprenant :
la réception (211, 311, 411, 511) dans un décodeur d'un ensemble de données d'utilisateur comprenant au moins une première charge utile chiffrée fournissant une qualité de base, qui est supportée par des appareils d'utilisateurs existants, et une seconde charge utile chiffrée fournissant une qualité supérieure et comprenant des éléments d'information qui ne sont pas inclus dans la première charge utile, la qualité supérieure n'étant pas supportée par les appareils d'utilisateurs existants ;
le déchiffrement (215, 215', 315, 315', 415, 415', 515, 515') de la première charge utile par une première unité de déchiffrement dans le décodeur et de la seconde charge utile par une seconde unité de déchiffrement dans le décodeur ;
le décodage, par le décodeur, (218, 218', 318, 318') de la première charge utile en un premier signal de données d'utilisateur fournissant une qualité de base et de la seconde charge utile en un second signal de données d'utilisateur, et la combinaison (221, 321) du premier signal de données d'utilisateur et du second signal de données d'utilisateur pour former un signal de données d'utilisateur de qualité supérieure ; ou
la combinaison, par le décodeur, (421, 521) de la première charge utile et de la seconde charge utile pour former une charge utile de données d'utilisateur de qualité supérieure, et le décodage (418, 418', 518, 518') de la charge utile de données d'utilisateur de qualité supérieure pour former un signal de données d'utilisateur de qualité supérieure.

11. Procédé pour décoder et rejeter, **caractérisé par** le procédé comprenant :
la réception (611, 711) dans un décodeur d'un ensemble de données d'utilisateur comprenant au moins une première charge utile chiffrée fournissant une qualité de base, qui est supportée par des appareils d'utilisateurs existants, et une seconde charge utile chiffrée fournissant une qualité supérieure, qui n'est pas supportée par les appareils d'utilisateurs existants ;
le rejet, par le décodeur, de la première charge utile chiffrée ;
le déchiffrement (615', 715') par une unité de déchiffrement dans le décodeur de la seconde charge utile chiffrée ; et
le décodage (618', 718') par le décodeur de la seconde charge utile déchiffrée en un signal de données d'utilisateur fournissant la qualité supérieure.

12. Procédé pour transférer des données, **caractérisé par** le procédé comprenant :
en réponse à la réception (13-7) dans un appareil de réseau d'un ensemble de données d'utilisateur comprenant au moins une première charge utile chiffrée fournissant une qualité de base, qui est supportée par des appareils d'utilisateurs existants, et une seconde charge utile chiffrée fournissant une qualité supérieure, qui n'est pas supportée par les appareils d'utilisateurs existants, la vérification, (13-9) par l'appareil de réseau de si oui ou non l'ensemble de données d'utilisateur doit être transféré vers une première infrastructure configurée pour supporter uniquement la qualité de base, et si l'ensemble de données d'utilisateur doit être transféré vers la première infrastructure, le rejet (13-9) par l'appareil de réseau de la seconde charge utile chiffrée de l'ensemble de données d'utilisateur et le transfert (13-7') de la première charge utile chiffrée en tant que données d'utilisateur au lieu de l'ensemble de données d'utilisateur à la première infrastructure ;
en réponse à la réception (13-2) dans l'appareil de réseau de données d'utilisateur comprenant la première charge utile chiffrée fournissant la qualité de base, la vérification (13-4) par l'appareil de réseau de si oui ou non les données d'utilisateur doivent être transférées vers une seconde infrastructure configurée pour supporter la qualité de base et la qualité supérieure, si les données d'utilisateur doivent être transférées vers la seconde infrastructure, le transfert (13-2') par l'appareil de réseau des données d'utilisateur à la seconde infrastructure, ou l'ajout (1103) par l'appareil de réseau à la première charge utile chiffrée d'un ou plusieurs bits de remplissage de sorte que la longueur des données d'utilisateur corresponde à une longueur d'une donnée d'utilisateur pour la qualité supérieure, et le transfert (1104) des données d'utilisateur contenant les bits de remplissage et la première charge utile chiffrée à la seconde infrastructure.

13. Produit de programme informatique comprenant un code de programme informatique configuré pour effectuer un procédé selon l'une quelconque des revendications 1 à 12 lorsqu'il est exécuté sur un appareil.

14. Appareil (121, 121') comprenant des moyens pour mettre en œuvre un procédé selon l'une quelconque des revendications 1 à 12.

15. Système de télécommunications (100) comprenant :
un premier réseau (110), qui est un réseau existant supportant une qualité de base pour des données d'utilisateur ;
un second réseau (120), qui est un réseau non existant, supportant la qualité de base pour des données d'utilisateur et une qualité supérieure pour des données d'utilisateur ;
un appareil d'utilisateur final (111, 111'), qui est un appareil d'utilisateur existant configuré pour fonctionner dans le premier réseau et comprenant des moyens pour encoder et chiffrer un signal de données d'utilisateur en une donnée d'utilisateur fournissant la qualité de base, des moyens pour envoyer les données d'utilisateur, des moyens pour recevoir une donnée d'utilisateur comprenant une charge utile encodée chiffrée fournissant la qualité de base, et des moyens pour déchiffrer et décoder la charge utile en un signal de données d'utilisateur ayant la qualité de base ;
**caractérisé par** le système comprenant :
un nœud de réseau (130) configuré pour comprendre des moyens pour mettre en œuvre un procédé selon la revendication 12 ; et
un appareil d'utilisateur final (121, 121'), qui est un appareil d'utilisateur non existant configuré pour fonctionner dans le second réseau et comprenant des moyens pour mettre en œuvre un procédé selon l'une quelconque des revendications 1 à 11.
